# EUROPEAN PATENT SPECIFICATION

(11) **EP 1 977 875 B1**
(45) Date of publication and mention of the grant of the patent: **21.11.2012**
(21) Application number: 08151448.1
(22) Date of filing: 14.02.2008
(51) Int. Cl.: B29C 45/16, B29C 45/00, B29C 45/06

(54) **Injection molding system including a printing device and injection molding method using the same**
Spritzgiessvorrichtung mit Einrichtung zum Bedrucken und Spritzgiessverfahren zur ihrer Verwendung
Système de moulage par injection avec une unité pour imprimer et procédé utilisant le système

(30) Priority: 02.04.2007 KR 20070032511
(43) Date of publication of application: 08.10.2008
(73) Proprietor: Samsung Electronics Co., Ltd., Suwon-si, Gyeonggi-do, 443-742 (KR)
(72) Inventor: Lee, Dong Yul, Gyeonggi-do (KR); Jang, Dong Seob, Seoul (KR); Song, Jun Gyu, Gyeonggi-do (KR); Lee, Kyoung Min, Gyeonggi-do (KR)
(74) Representative: Grootscholten, Johannes A.M.

(56) References cited:
- WO-A-01/76847
- DE-A1- 1 942 932
- JP-A- 63 135 214
- JP-A- 63 254 016
- US-A1- 2006 123 574

## Description

The present invention relates to an injection molding system and an injection molding method using the same, and more particularly to an injection molding system including a printing device to achieve a printing process during an injection molding process and an injection molding method using the injection molding system.

An injection molding device is a device to form a product having a desired shape by using a mold having a mold cavity formed in a shape corresponding to the product.

In order to print an injection molded article, the molded article is first removed from a mold, and then a printing process is performed on a surface of the molded article by using a printing device.

However, such a conventional injection molding/printing method requires processes of removing a molded article from a mold and transferring the molded article to a printing device. Further, the conventional injection molding/printing method additionally requires processes of: cleaning the molded article by air spray or a brush to eliminate contaminants which may be attached to the molded article during the transferring process; fixing the molded article to a jig which has been fabricated in advance adequately for the molded article to achieve a printing process; and removing the molded article from the jig after the printing process.

Also in a conventional multi-injection molding work, if removing the molded article from the mold during the multi-injection molding process to print the molded article, the aforesaid additional processes are required. Therefore, it is common to perform the printing process when the multi-injection molding process is completely terminated.

However, because the printing process is performed after the multi-injection molding process, a printed image is printed on the surface of the molded article. Such a printed image printed on the surface of the molded article is very weak against wear, scratching or the like generated naturally during the use of the artickle, and this is easily erased.

WO-A-01/076847 discloses an injection molding system according to the preamble of claim 1.

JP-A-63 135 214 discloses an injection molding system having a cubical shaped base (2) provided with four core molds (3a-d). First, a first layer (21) is formed between core mold (3a) and cavity mold (6). The base (2) is then rotated 90' to allow the provision of an identification pattern, for instance by the placement of an identification member, hot stamping or printing. After a further rotation of 90°, a second layer (23') is formed using cavity mold (7). Next, the base 92) is rotated to release the article.

### SUMMARY OF THE INVENTION

Therefore, it is an aspect of the invention to provide an injection molding system and an injection molding method using the same that can achieve a printing process on a molded article during an injection molding process.

It is another aspect of the invention to provide an injection molding system and an injection molding method using the same that can preserve a printed image printed on a molded article semi-permanently.

Additional aspects and/or advantages of the invention will be set forth in part in the description which follows and, in part, will be obvious from the description, or may be learned by practice of the invention.

In accordance with the invention, there is provided an injection molding system according to claim 1.

Further embodiment of the invention are defined in the features of claims 2-6.

The printing device may be configured as a pad printing machine.

The pad printing machine may include a pad to transfer a printed image, and a moving part to move the pad.

The printing device may be configured as an ink jet printing machine.

The ink jet printing machine may include an ink jet head to form a printed image, and a moving part to move the ink jet head.

In accordance with the invention, there is provided an injection molding method using an injection molding system according to claim 7.

The molded article may be injection-molded from a transparent material.

### BRIEF DESCRIPTION OF THE DRAWINGS

These and/or other aspects and advantages of the exemplary embodiments of the invention will become apparent and more readily appreciated from the following description of the embodiments, taken in conjunction with the accompanying drawings, of which:
FIG. 1 is a perspective view illustrating a constitution of an injection molding system in accordance with an exemplary embodiment of the present invention;
FIG. 2 is a sectional view illustrating a first injection molding process by a first mold and a second mold coupled to each other;
FIG. 3 is a perspective view illustrating a process of printing a first molded article unit after the first injection molding;
FIG. 4 is a perspective view illustrating a state before performing a second injection molding process in the injection molding system shown in FIG. 1;
FIG. 5 is a sectional view illustrating a second injection molding process by a first mold and a third mold coupled to each other;
FIG. 6 is a perspective view illustrating an example of a molded article manufactured by the injection molding system and the injection molding method in accordance with the present invention; and
FIG. 7 is a perspective view illustrating a printing process in an injection molding system in accordance with another exemplary embodiment of the present invention.

### DETAILED DESCRIPTION OF THE PREFERRED EMBODIMENTS

Reference will now be made in detail to exemplary embodiments of the present invention, examples of which are illustrated in the accompanying drawings, wherein like reference numerals refer to like elements throughout. The embodiments are described below to explain the present invention by referring to the figures.

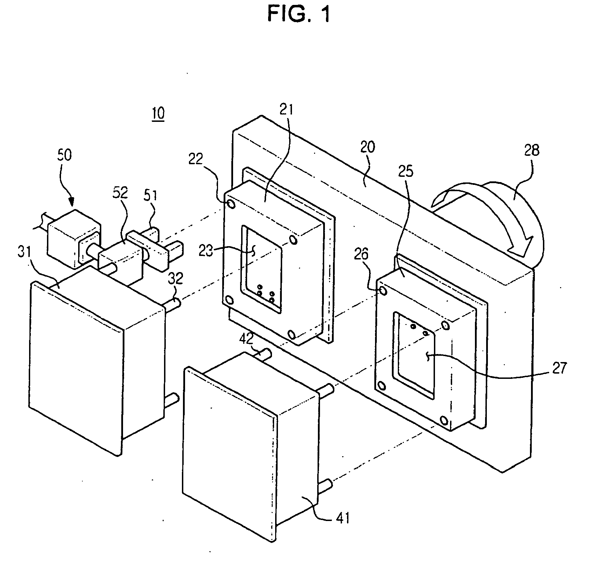

FIG. 1 is a perspective view illustrating a constitution of an injection molding system in accordance with an exemplary embodiment of the present invention.

As shown in FIG. 1, an injection molding system 10 of the present invention includes first molds 21 and 25, a second mold 31 and a third mold 41 coupled to the first molds 21 and 25 to define mold cavities 23 and 27 to form a molded article, and a pad printing machine 50 to transfer a printed image onto the molded article.

The first molds 21 and 25 are provided in a pair, and are fixed to a mold fixing plate 20. The pair of first molds 21 and 25 are arranged at a predetermined distance from each other on a front surface of the mold fixing plate 20, and have a phase difference of 180 degrees between each other.

The mold fixing plate 20 is provided with a rotating shaft 28 connected to a moving device (not shown), so as to move forward and backward and rotate. In other words, the first molds 21 and 25 serve as a moving part.

The second mold 31 and the third mold 41 serve as a fixed part. The second mold 31 and the third mold 41 are spaced from each other, at a distance equal to the distance between the pair of first molds 21 and 25.

The second mold 31 is coupled to the first mold 21 which is positioned on the left in the drawing, to define the mold cavity 23 to achieve a first injection molding process. The third mold 41 is coupled to the first mold 25 which is positioned on the right in the drawing, to define the mold cavity 27 to achieve a second injection molding process on the first molded article unit which is injection molded through the first mold 21 and the second mold 31.

In order to securely couple the second and third molds 31 and 41 to the first molds 21 and 25 by the forward/backward movement of the mold fixing plate 20, the second mold 31 and the third mold 41 are provided with a plurality of guide rods 32 and 42, and the first molds 21 and 25 are formed with a plurality of guide holes 22 and 26 opposing the guide rods 32 and 42 so as to receive the guide rods 32 and 42.

The pad printing machine 50, as a printing device to print the molded article, is disposed adjacent to the first mold 21.

The pad printing machine 50 includes a pad 51 to transfer a printed image onto a surface of the molded article, and a moving part 52 to move the pad 51 so as to achieve a printing process using the pad 51.

The pad 51 may be made of a soft material, such as silicone. The printed image is previously transferred onto the pad 51, and then is transferred onto the molded article from the pad 51, thereby printing the image on the molded article.

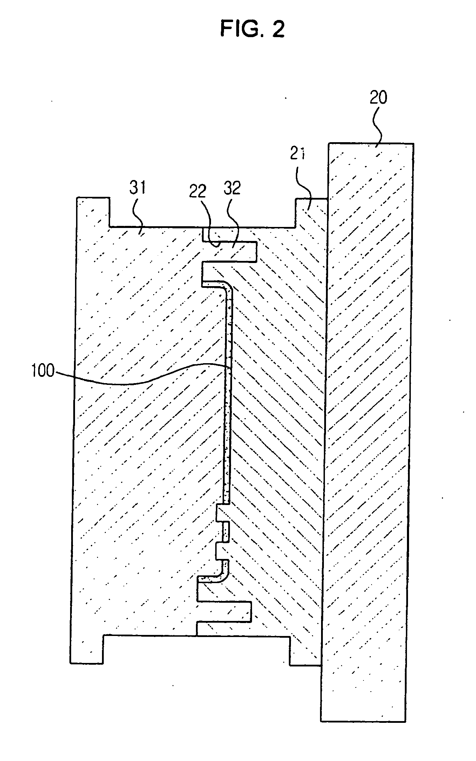

The injection molding and printing processes of the injection molding system 10 will now be described with reference to FIGs. 2 to 6.

FIG. 2 is a sectional view illustrating a first injection molding process by using the first mold and the second mold coupled to each other.

The first mold 21 and the second mold 31 are coupled to each other by moving the mold fixing plate 20 forward, and together form the mold cavity. If a molten material is injected into the mold cavity, as shown in the drawing, a first molded article unit 100 is formed.

At this time, the first molded article unit 100 may be made of a transparent material so that the printed image printed in the following printing process can be projected.

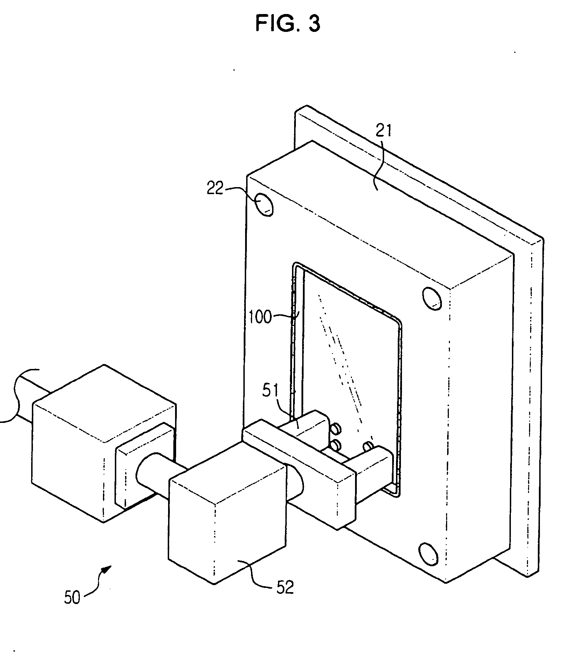

FIG. 3 is a perspective view illustrating a process of printing the first molded article unit after the first injection molding.

If the mold fixing plate 20 (refer to FIG. 2) moves backward after the first injection molding, the mold cavity is opened. At this time, as shown in FIG. 3, the first molded article unit 100 is in a state of being fixed to the first mold 21.

While the first molded article unit 100 is fixed to the first mold 21, a process of solidifying the first molded article unit 100 should be performed before a process of transferring the printed image by the pad printing machine 50 is performed. The process of solidifying the first molded article unit 100 can be achieved by a temperature controller (not shown) after injecting the molten material for the first injection molding.

As shown in FIG. 3, while the first molded article unit 100 is fixed to the first mold 21, the pad printing machine 50 moves the pad 51 to a desired printing position of the first molded article unit 100, and presses the pad 51 to the first molded article unit 100 to print the image on the first molded article unit 100.

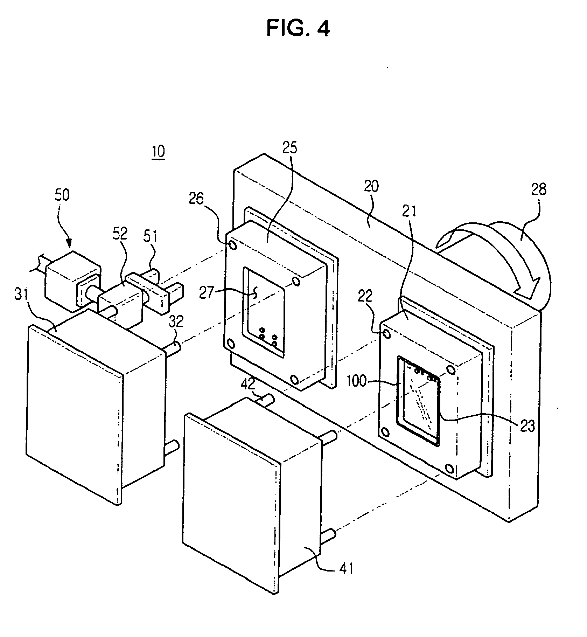

FIG. 4 is a perspective view illustrating a state before performing a second injection molding process in the injection molding system shown in FIG. 1.

When the above printing process is terminated, a second injection molding process is performed. As shown in FIG. 4, while the first molded article unit 100 is fixed to the first mold 21, the mold fixing plate 20 rotates at 180 degrees so that the first molded article unit 100 is located in front of the third mold 41.

Similarly to the first injection molding process, the mold fixing plate 20 moves forward to perform the second injection molding process on the first molded article unit 100. At the same time, the first injection molding process as described above is also performed between the first mold 25 and the second mold 31, which are positioned opposite to the first mold 21 and the third mold 41.

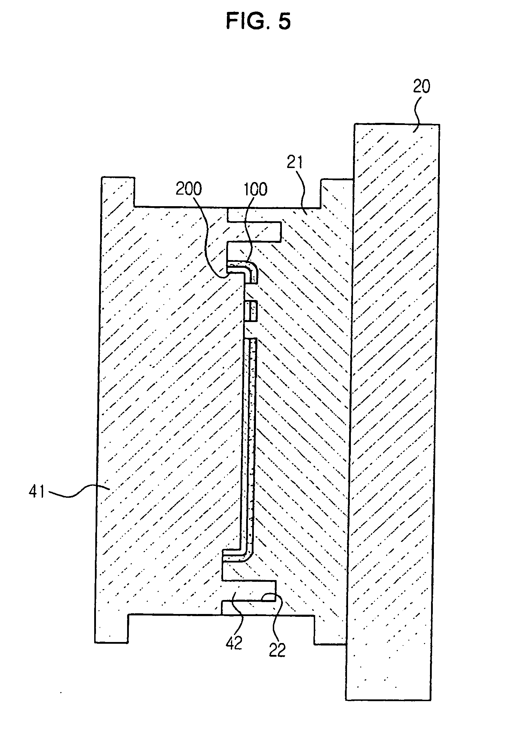

FIG. 5 is a sectional view illustrating the second injection molding process by the first mold and the third mold coupled to each other.

By moving the mold fixing plate 20 forward, the first mold 21 and the first molded article unit 100 form the mold cavity through the coupling to the third mold 41. If a molten material is injected into the mold cavity, a second molded article unit 200 is formed.

At this time, the molten material used in the second injection molding process may be selected from materials different from the molten material used in the first injection molding process. For example, the molten material used in the second injection molding process may be selected from opaque materials so that the printed image can appear clearly.

When the injection of the molten material is terminated, a process of solidifying the molded article is performed by cooling the same. Thereafter, if the mold fixing plate 20 is moved backward, the mold cavity is opened, and the molded article composed of the first molded article unit 100 and the second molded article unit 200 is exposed outside. Finally, the molded article is removed from the mold.

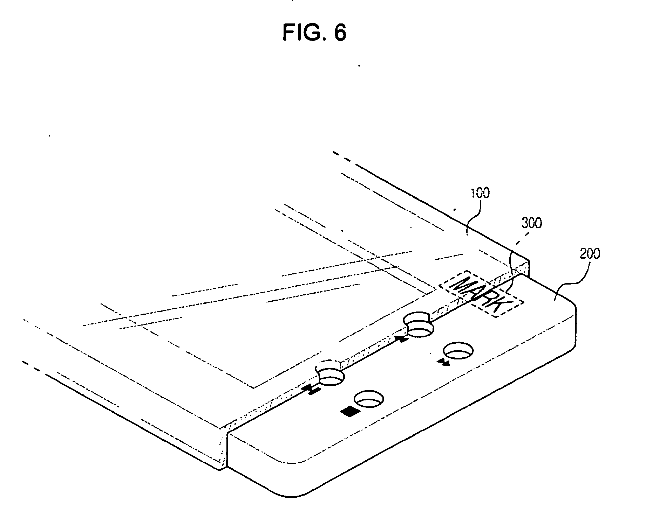

FIG. 6 is a perspective view illustrating an example of the molded article manufactured by the injection molding system and the injection molding method in accordance with the present invention.

The molded article includes the overlying first molded article unit 100 made of a transparent material, and the underlying second molded article unit 200 adhered to a rear surface of the first molded article unit 100.

A printed image 300 formed by the aforesaid printing process exists between the first molded article unit 100 and the second molded article unit 200. Since the printed image 300 is not exposed outside, the printed image 300 is not affected by wear due to friction, or the like, and can be preserved semi-permanently.

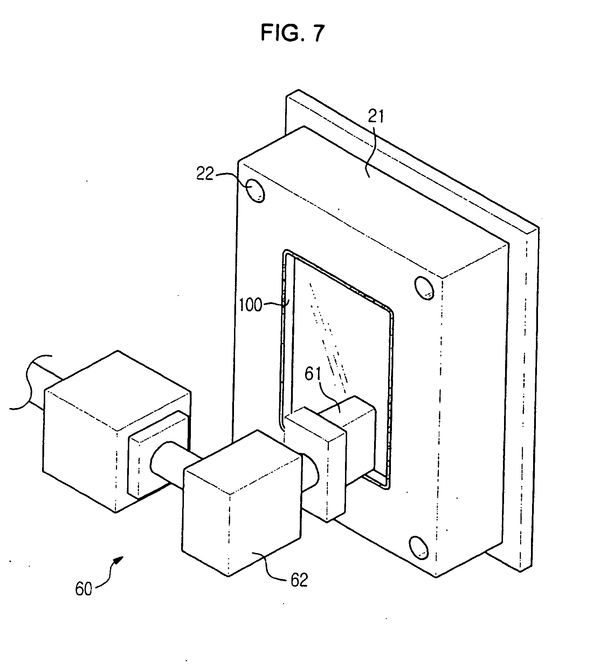

FIG. 7 is a perspective view illustrating a printing process in an injection molding system in accordance with another exemplary embodiment of the present invention.

An injection molding system of this embodiment has basically the same components as the injection molding system of the previous embodiment, except that a printing device of this embodiment is configured as an ink jet printing machine 60.

The ink jet printing machine 60 includes an ink jet head 61 to eject an ink, and a moving part 62 to move the ink jet head 61 to a desired printing position.

The printing device in the injection molding system according to the present invention is not restricted to the pad printing machine or the ink jet printing machine, but may be configured as other types of printing machines.

Although the above embodiments exemplify that the present invention is applied to the injection molding device for double-injection molding, the present invention can also be applied to an injection molding device for single-injection molding and a printing process performed after the single-injection molding.

As apparent from the above description, the injection molding system and the injection molding method using the same according to the present invention can considerably simplify the printing process for the molded article by printing the molded article while the molded article is fixed to the mold.

Further, since the printed image exists between two molded article units, the printed image is not affected by a physical force, such as friction, applied to the molded article, and can be preserved semi-permanently.

Although embodiments of the present invention have been shown and described, it would be appreciated by those skilled in the art that changes may be made in this embodiment without departing from the principles of the invention, the scope of which is defined in the claims.

## Claims

1. An injection molding system (10) comprising:
at least one first mold (21);
a second mold (31) defining a mold cavity (23) with the first mold to form a molded article, and;
a printing device (50) to print the molded article;
at least one multi-injection mold to perform a multi-injection process on the molded article when the printing device completely prints the molded article fixed to the first mold, wherein the multi-injection mold is a third mold (41) to perform a double-injection molding process on a second surface of the molded article (200) when the printing device completely prints the second surface of the molded article;
wherein the first mold (21) is mounted to a mold fixing plate (20) rotatably provided, whereby the first mold (21) moves to the third mold (41) by the mold fixing plate, and is coupled to the third mold to perform the double-injection molding process, wherein the second mold (31) and the third mold (41) are arranged at a predetermined distance from each other and, the at least one first mold includes a pair of first molds (21,25), the pair of first molds being arranged on the mold fixing plate at a distance from each other, equal to the distance between the second mold and the third mold, **characterized in that** the printing device (50) is arranged to print the second surface of the molded article while the mold cavity (23) is opened and a first surface of the molded article is fixed to the first mold, and wherein the printing device (50) comprises printing means (51,61) to print an image and a moving part (52,62) to move the printing means (51,61) to a desired printing position.

2. The injection molding system according to claim 1, wherein the mold fixing plate (20) is arranged to move forward and backward for opening and coupling the molds.

3. The injection molding system according to claim 1 or 2, wherein the printing device (50) is configured as a pad printing machine.

4. The injection molding system according to claim 3, wherein the pad printing machine includes a pad (51) to transfer a printed image, and a moving part to move the pad.

5. The injection molding system according to claim 1 or 2, wherein the printing device is configured as an ink jet printing machine.

6. The injection molding system according to claim 5, wherein the ink jet printing machine includes an ink jet head to form a printed image, and a moving part to move the ink jet head.

7. An injection molding method using an injection moulding system (10) according to any of the claims 1 to 6, comprising:
injecting a molten material into the mold cavity (23) to form the molded article;
solidifying the molded article;
opening the mold cavity;
printing an image on the molded article by using the printing device (50) while the molded article is fixed to the first mold, wherein the printing device completely prints the molded article;
performing an additional injection moulding process on an image-printed surface of the molded article by moving the first mold (21) to the third mold (41) by the mold fixing plate and coupling the first mold (21) to the third mold to perform the double-injection molding process.

8. The injection molding method according to claim 7, wherein the molded article is injection-molded from a transparent material.

## Patentansprüche

1. Spritzgießsystem (10), umfassend:
zumindest eine erste Form (21);
eine zweite Form (31), die einen Formhohlraum (23) mit der ersten Form begrenzt, um ein Formteil zu schaffen; und
eine Druckvorrichtung (50), um das Formteil zu bedrucken;
zumindest eine Multispritzgießform, um einen Multispritzgießprozess am Formteil durchzuführen, wenn die Druckvorrichtung das an der ersten Form fixierte Formteil vollständig bedruckt, wobei die Multispritzgießform eine dritte Form (41) ist, um einen Doppelspritzgießprozess an einer zweiten Fläche des Formteils (200) durchzuführen, wenn die Druckvorrichtung die zweite Fläche des Formteils vollständig bedruckt;
wobei die erste Form (21) an einer rotierbar vorgesehenen Formbefestigungsplatte (20) montiert ist, wodurch sich die erste Form (21) zur dritten Form (41) durch die Formbefestigungsplatte bewegt, und an die dritte Form gekoppelt wird, um den Doppelspritzgießprozess durchzuführen, wobei die zweite Form (31) und die dritte Form (41) in einem vorgegebenen Abstand voneinander angeordnet sind, und die zumindest eine erste Form ein Paar erster Formen (21, 25) beinhaltet, wobei das Paar erster Formen auf der Formbefestigungsplatte in einem Abstand voneinander angeordnet ist, der gleich dem Abstand zwischen der zweiten Form und der dritten Form ist, **dadurch gekennzeichnet, dass** die Druckvorrichtung (50) angeordnet ist, um die zweite Fläche des Formteils zu bedrucken, während der Formhohlraum (23) geöffnet ist und eine erste Fläche des Formteils an der ersten Form fixiert ist, und wobei die Druckvorrichtung (50) Druckmittel (51, 61) umfasst, um ein Abbild zu drucken, und einen beweglichen
Teil (52, 62), um die Druckmittel (51, 61) zu einer gewünschten Druckposition zu bewegen.

2. Spritzgießsystem nach Anspruch 1, wobei die Formbefestigungsplatte (20) angeordnet ist, um sich zwecks Öffnung und Kopplung der Formen vor und zurück zu bewegen.

3. Spritzgießsystem nach Anspruch 1 oder 2, wobei die Druckvorrichtung (50) als Tampondruckmaschine ausgebildet ist.

4. Spritzgießsystem nach Anspruch 3, wobei die Tampondruckmaschine einen Tampon (51) beinhaltet, um ein Druckbild zu übertragen, und einen beweglichen Teil, um den Tampon zu bewegen.

5. Spritzgießsystem nach Anspruch 1 oder 2, wobei die Druckvorrichtung als Tintenstrahldruckmaschine ausgebildet ist.

6. Spritzgießsystem nach Anspruch 5, wobei die Tintenstrahldruckmaschine einen Tintenstrahlkopf beinhaltet, um ein Druckbild zu schaffen, und einen beweglichen Teil, um den Tintenstrahlkopf zu bewegen.

7. Spritzgießverfahren unter Anwendung eines Spritzgießsystems (10) nach einem der Ansprüche 1 bis 6, umfassend:
Einspritzen eines geschmolzenen Materials in den Formhohlraum (23), um das Formteil zu schaffen;
Erstarrenlassen des Formteils;
Öffnen des Formhohlraums;
Drucken eines Abbilds auf das Formteil durch Anwenden der Druckvorrichtung (50), während das Formteil an der ersten Form fixiert ist, wobei die Druckvorrichtung das Formteil vollständig bedruckt;
Durchführen eines zusätzlichen Spritzgießprozesses an einer Abbild-bedruckten Fläche des Formteils durch Bewegen der ersten Form (21) zur dritten Form (41) durch die Formbefestigungsplatte und Koppeln der ersten Form (21) an die dritte Form, um den Doppelspritzgießprozess vorzunehmen.

8. Spritzgießverfahren nach Anspruch 7, wobei das Formteil aus einem transparenten Material spritzgegossen wird.

## Revendications

1. Système de moulage par injection (10) comprenant:
au moins un premier moule (21);
un deuxième moule (31) définissant une cavité de moule (23) avec le premier moule pour former un article moulé; et un dispositif d'impression (50) destiné à effectuer une impression sur l'article moulé,
au moins un moule pour multi-injection destiné à la mise en oeuvre d'un procédé multi-injection sur l'article moulé lorsque le dispositif d'impression effectue une impression complète de l'article moulé fixé au premier moule, dans lequel le moule pour multi-injection est un troisième moule (41) destiné à la mise en oeuvre d'un procédé de moulage par double-injection sur une deuxième surface de l'article moulé (200) lorsque le dispositif d'impression effectue une impression complète de la deuxième surface de l'article moulé;
le premier moule (21) étant monté sur une plaque de fixation de moule (20) agencée de manière rotative, au moyen de laquelle le premier moule (21) subit un déplacement vers le troisième moule (41) par l'intermédiaire de la plaque de fixation de moule, et est couplé au troisième moule pour mettre en oeuvre le procédé de moulage par double-injection, le deuxième moule (31) et le troisième moule (41) étant agencés à une distance prédéterminée l'un de l'autre, et l'au moins un premier moule comprend une paire de premiers moules (21, 25), la paire de premiers moules étant agencée sur la plaque de fixation de moule à une certaine distance l'un de l'autre, équivalente à la distance séparant le deuxième moule du troisième moule, **caractérisé en ce que** le dispositif d'impression (50) est agencé pour effectuer une impression sur la deuxième surface de l'article moulé pendant que la cavité de moule (23) est ouverte et qu'une première surface de l'article moulé est fixée au premier moule, le dispositif d'impression (50) comprenant des moyens d'impression (51, 61), qui permettent d'imprimer une image, et une partie de déplacement (52, 62) qui déplace les moyens d'impression (51, 61) en une position d'impression souhaitée.

2. Système de moulage par injection selon la revendication 1, dans lequel la plaque de fixation de moule (20) est agencée pour se déplacer vers l'avant et vers l'arrière pour permettre l'ouverture et le couplage des moules.

3. Système de moulage par injection selon la revendication 1 ou 2, dans lequel le dispositif d'impression (50) est configuré sous la forme d'une imprimante à tampon.

4. Système de moulage par injection selon la revendication 3, dans lequel l'imprimante à tampon comprend un tampon (51) destiné à transférer une image imprimée, et une partie de déplacement destinée à déplacer le tampon.

5. Système de moulage par injection selon l'une quelconque des revendications 1 ou 2, dans lequel le dispositif d'impression est configuré comme imprimante à jet d'encre.

6. Système de moulage par injection selon la revendication 5, dans lequel l'imprimante à jet d'encre comprend une tête d'impression à jet d'encre destinée à former une image imprimée, et une partie de déplacement permettant de déplacer la tête d'impression à jet d'encre.

7. Procédé de moulage par injection mettant en oeuvre le système de moulage par injection (10) selon l'une quelconque des revendications 1 à 6, comprenant:
l'injection d'un matériau en fusion dans la cavité de moule (23) pour former l'article moulé;
la solidification de l'article moulé;
l'ouverture de la cavité de moule;
l'impression d'une image sur l'article moulé au moyen du dispositif d'impression (50) pendant que l'article moulé est fixé au premier moule, le dispositif d'impression effectuant une impression complète de l'article moulé;
la mise en oeuvre d'un processus de moulage par injection supplémentaire sur une surface de l'article moulé ayant reçu l'impression d'une image en déplaçant le premier moule (21) vers le troisième moule (41) par l'intermédiaire de la plaque de fixation de moule et en couplant le premier moule (21) au troisième moule pour réaliser le procédé de moulage par double-injection.

8. Procédé de moulage par injection selon la revendication 7, dans lequel l'article moulé est moulé par injection à partir d'un matériau transparent.
